# EUROPEAN PATENT SPECIFICATION

(11) **EP 1 483 153 B1**
(45) Date of publication and mention of the grant of the patent: **04.01.2006**
(21) Application number: 03709721.9
(22) Date of filing: 24.02.2003
(51) Int. Cl.: B65B 23/12, B65G 47/08, B65G 47/14

(54) **PLACEMENT APPARATUS**
POSITIONIERUNGSVORRICHTUNG
APPAREIL DE PLACEMENT

(30) Priority: 01.03.2002 GB 0204899
(43) Date of publication of application: 08.12.2004
(73) Proprietor: SOCIETE DES PRODUITS NESTLE S.A., 1800 Vevey (CH)
(72) Inventor: PARSONS, Nicholas Tyers, Copm anthorpe York YO23 3UX (GB)
(86) International application number: PCT/EP2003/001906
(87) International publication number: WO 2003/074362

(56) References cited:
- FR-A- 1 530 088
- GB-A- 1 008 082
- GB-A- 1 282 328
- GB-A- 2 342 908

## Description

The invention relates to apparatus for placing product pieces into trays, and in particular apparatus for placing friable product pieces into tray cavities at high speed.

There is a need in confectionery manufacture to deliver confectionery product pieces into moulds to be covered in chocolate. It is economically important that this process can be carried out at high speed. It is convenient to be able to place large amounts of confectionery product pieces in a hopper, without needing to pre-align and sort the product pieces. Apparatus is available for delivering the confectionery pieces from the hopper rapidly into the cavities of a series of moulds. For confectionery product pieces that are hard and strong, such as nut kernels, such systems give good results.

However, many confectionery product pieces are not mechanically strong. Confectionery product pieces may be made of soft, friable material, for example wafer, a laminate of a number of layers of wafer held together with fat-based praline filling, biscuits, nougatine, cinder toffee or any of a number of other types of product pieces. Such friable product pieces give rise to problems during manufacture. In particular, such product pieces are fragile and can break apart during the manufacturing process.

The difficulties of dealing with friable product pieces are increased where the surfaces of the product pieces are not smooth. Examples include trapezoidal or cuboidal product pieces. The difficulties are still further enhanced where it is desired to make small "bite-sized" confectionery products, that is to say confectionery product where the whole product can be eaten in one mouthful. Small pieces are particularly prone to jamming in existing systems. Small pieces also can lose their shape during manufacture. It is difficult to deliver large numbers of breakable, brittle and/or friable, angular product pieces in the correct orientation into a series of mould cavities sufficiently quickly for economically viable manufacture.

The need is particularly acute when it is necessary to fill tray cavities with friable pieces that substantially fill the cavity so that any overlap of pieces over the cavity side is likely to cause blockages or poor quality product.

In an attempt to deal with this problem, the inventors first tried using a multiple channel vibrating feeding table manufactured by Realfeed S.r.l., similar to that described in Realfeed's patent EP 0524571. Such a system delivers product along a plurality of adjacent troughs which may be individually vibrated to cause product to travel along the vibrated trough. The inventors arranged for moulds to be moved past the ends of the troughs and for the system to be controlled to deliver product into cavities in the moulds.

However, although the apparatus used could deliver 150 pieces per minute on each track, such a delivery rate could not be combined with accurate placement of product in the mould tray cavities. Where it was desired to accurately synchronise the product emerging from the troughs with mould cavities moving past the ends of the troughs, it is necessary to operate the apparatus no faster than 60 pieces per minute, perhaps no faster than 40 pieces per minute, which is not rapid enough for cost-effective manufacture. It is further difficult to accurately deliver product pieces into the mould cavity with sufficient reliability for commercial manufacture.

The inventors attempted a number of alternative approaches which did not result in satisfactory reliability or speed.

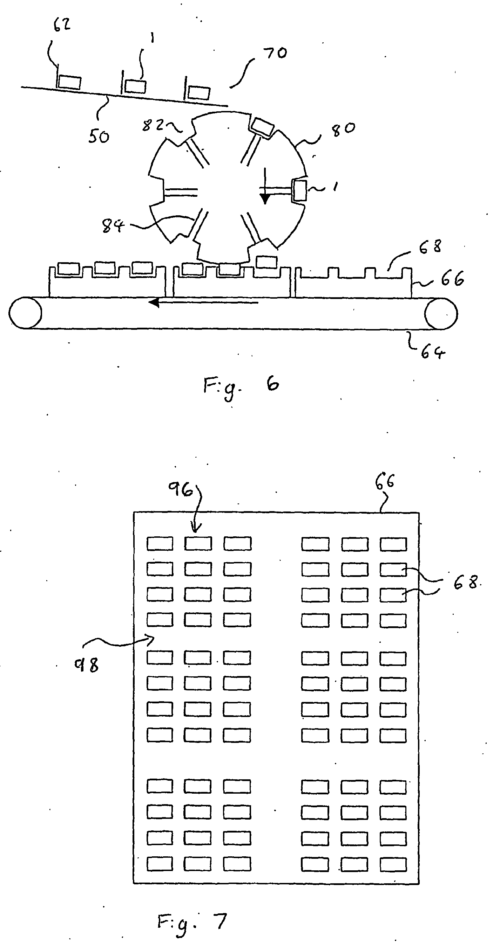

The first approach was simply to take a chute from the hopper and deliver pieces from the hopper directly into a rotating cylinder with trays around its circumference, similar to that described later with reference to Figure 6. However, broken product pieces easily blocked the motion of the roller as they were not delivered to the trays in a sufficiently oriented or synchronised manner.

Other attempts involved modifying the apparatus of EP 524571 by forcing pieces through closed guides with constricting profile. These guides were easily blocked and jammed by the friable pieces.

If the pieces are not delivered accurately and reliably to the centres of the trays, then subsequent processing of the trays can cause further problems. For example, if pieces extend over one of the edges of the tray, they may be crushed as the tray moves onwards through the rest of the apparatus.

Similar problems can occur in the manufacture of other food products involving small friable pieces. A placement apparatus suitable for feeding small pieces is disclosed in document FR-A-1 530 088. Another similar apparatus is disclosed in document GB-A-2 342 908.

Accordingly, there remains a need for improved apparatus for accurately placing friable product pieces into tray cavities, in particular so that they are fully contained within the cavity, not overlapping the edge, and correctly oriented.

According to the invention, there is provided a placement apparatus for feeding friable product pieces in parallel into a series of cavities in trays, the placement apparatus comprising: a plurality of accumulation tracks for accepting and holding individual product pieces and delivering product pieces from an output end; delivery means at the output ends of the accumulation tracks for controllably ejecting individual product pieces from the accumulation tracks; a plurality of feed guides having input ends and output ends, the input ends being aligned with the output ends of the accumulation tracks for accepting individual product pieces ejected from the accumulation tracks, wherein the feed guides have an alignment section shaped to orient and align the product pieces and deliver the product pieces to the cavities in the trays; tray conveying means for moving trays past the output ends of the feed guides; and conveying means having a plurality of flights for pushing product pieces forwards along at least the whole of the alignment section of the feed guides and out of the output ends of the feed guides synchronously with the motion of the trays to deliver product pieces into the cavities in the trays.

The inventors have realised that it is necessary to provide feed guides to orient, constrain and hold product pieces to ensure that they correctly fall into the mould tray cavities in the mould. However, the problem with doing this is that friable short lengths of product pieces can easily jam in the constraining section. In the invention, the product pieces are positively driven by the conveying means throughout the whole of the section of the feed guide that orients and aligns the product pieces. Thus, in the invention the product pieces are ejected far enough along the feed guides that they can be positively pushed by the flights. Thus, a vibrating table forward feed such as that described in EP 524571 is not used for the part of the feed track that orients the product. This greatly reduces the risk of blockage.

Using the apparatus according to the invention, it is also possible to control the conveying means to synchronise the motion of the product pieces with the mould tray cavities, even at high speed. The pieces can be delivered in precise alignment. The risk of blockage is minimised, even with dusty and/or friable product.

The invention is capable of depositing friable product pieces reliably into tray cavities to substantially fill the cavities. This avoids problems which may occur when product pieces overlap the sides of the tray cavity, problems which may include blockage of the apparatus or poor quality product.

Preferably, the delivery means for delivering product to the feed guide includes an air nozzle for accelerating individual product pieces onto the feed guide. An air jet is able to accelerate product pieces without physical contact. Alternative approaches have been tried, and give less good results. For example, a high speed take off belt for pulling product forward and a gate for releasing product to be taken off by the belt might be used. This causes drag, is harder to synchronise and the pieces may climb up on one another. A further alternative may be a "flicker" to flick product pieces forward, but this may cause damage to a delicate product. The accelerated product pieces may be accelerated at sufficient speed to ensure that they pass through the whole of a first, v-shaped section of a feed guide into the section driven by the flights of the conveying means.

Preferably, the air nozzle is a forward facing air nozzle aligned above the output end of the accumulation track at an angle of 15° to 45° to the accumulation track, further preferably 20° to 40°. In order to dissipate the air ejected by the nozzle, a slot may be provided in the first v-shaped section of the feed guide to prevent the air being guided by the feed guides along the whole length of the guide. The relative timing of the air jet pulse to the position of the flight may be controlled.

The delivery means may further include a moveable gate that can open and close to allow or prevent product pieces from moving from the accumulation tracks to the feed guides.

To prevent product pieces accelerated by the delivery means bouncing back from a flight of a conveyor to create a blockage, a detent may be provided at the input end of each of the feed guides for preventing backwards motion.

A vent may be provided through the input end of the feed guides to allow the air from the air jet to vent.

The feed guides preferably have an initial v-shaped section. This may be long enough that the product pieces slow down to a moderate speed by the time the product pieces reach the orientation section. The length of the v-shaped section is limited by the pitch between flights, which is ultimately related to mould layout. The detent may assist in slowing down the piece. To still further improve the reliability air jets at the end of feed guide may be provided to push product pieces back against the flights to ensure accurate front to back positioning.

The flight conveyor may be driven by a servo drive to ensure accurate synchronisation with mould tray position.

A roller may be provided in the path of the mould trays after the second ends of the feed guide to press product into the cavities, for example, if the cavities contain liquid chocolate, the roller may push the product pieces into the chocolate. A forwards and backwards reciprocating roller may be used, that reciprocates forward and backwards at higher speed than the speed of the mould tray in order to push down any product pieces resting against the front or back portions of the mould tray cavities.

Apparatus according to the invention is preferably capable of delivering at least 60 product pieces per minute per guide into the mould tray cavities, further preferably at least 120 or even 150 product pieces per minute.

It is envisaged that the apparatus is particularly useful to deliver product directly into the mould tray cavities of moulds from the output ends of the feed guides.

In some embodiments the apparatus may include an intermediate moving member that accepts product pieces from the output end of the feed guides and delivers the product pieces to the cavities of a mould tray. This arrangement may in particular be used when the mould cavity and the piece shape are very different but accurate placement is still required, for example if a small wafer piece must be placed in a much larger chocolate block. In embodiments, the intermediate moving member may be a roller with cavities arranged around its outer circumference. Product pieces may be delivered into the cavities of the roller from the feed guides. The roller may be provided with a vacuum system for holding product pieces in the cavities. Moulds having cavities may be arranged to pass the roller in such a fashion that at the predetermined position the product pieces are synchronously released into the mould cavities. The advantage of this approach is that the cavities of the intermediate moving member may be optimally shaped for receiving the product pieces; it is not necessary that these cavities have the shape of the finished product.

The accumulation tracks are preferably angled downwards towards the output ends at an angle insufficient to cause the product pieces to slide under their own weight. Vibration means may preferably be provided to controllably vibrate the accumulation tracks to cause product pieces to move downwards along the track towards the delivery means. Preferably, the accumulation tracks are v-shaped to reduce the risk of blockages.

A feed apparatus may be provided for feeding product pieces into the individual accumulation tracks. The feed apparatus may have a hopper into which product pieces can be placed. Preferably, the feed apparatus includes a plurality of further tracks sloping downhill from the hopper feeding product pieces into corresponding accumulation tracks, a reciprocating drive for selectably vibrating the further tracks to cause product to be transported along the further tracks, and control means for causing vibration of respective further tracks when the number of product pieces from the respective accumulation tracks falls below a predetermined value. In this way, the accumulation tracks can be filled by the further feed apparatus as and when required. A photocell may be provided on each accumulation track to determine when the accumulation track requires further product, and the corresponding further track may be vibrated when the photocell indicates that the accumulation track requires further product.

The further feed apparatus is preferably capable of feeding product pieces to the accumulation tracks at a rate of at least 10%, further preferably 20% higher than the rate of delivery of product to the mould tray cavities.

The further tracks may be contoured to uniquely orienting the product pieces on the further tracks as the pieces pass along the track. A finger may also be provided for removing from the further track incorrectly positioned or sized product pieces. Alternatively or additionally, the accumulation tracks and/or feed guides may be contoured to orient product pieces, and/or provided with a finger.

The invention also relates to a method of feeding friable product into a series of cavities in mould trays, including: ejecting individual product pieces into feed guides past a first feed guide section into a second feed guide section; aligning the product pieces in the second feed guide section; conveying mould trays with cavities past the end of the second feed guide section; and pushing the product pieces positively through the whole length of the second feed guide section and out of the ends into the cavity mould trays.

A specific embodiment of the invention will now be described, purely by way of example, with reference to the accompanying drawings in which:
Figure 1 shows a side view of an embodiment of placement apparatus according to the invention;
Figure 2 shows a top view of part of the placement apparatus of Figure 1;
Figure 3 shows cross-sections of carrier tracks in the placement apparatus of Figure 1;
Figure 4 shows cross-sections of the feed guides in the placement apparatus of Figure 1;
Figure 5 shows a product piece;
Figure 6 shows an alternative arrangement for feeding product; and
Figure 7 illustrates a mould tray.

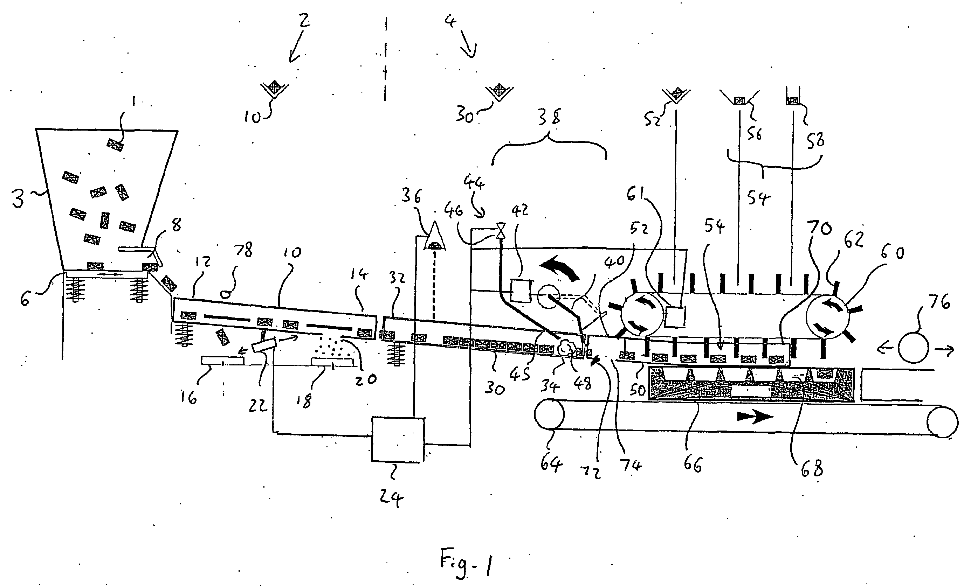

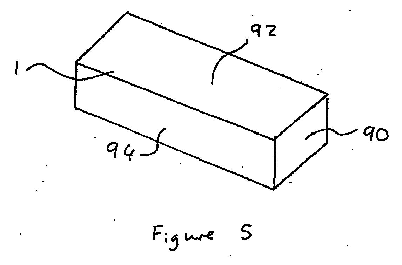

The specific embodiment of Figures 1 to 4 is particularly for use in feeding small product pieces 1 into a number of moulds at high speed. The product pieces 1 may be cuboidal wafer laminate pieces including three layers of wafer held together with fat based filling. The cuboidal product pieces 1 have in the embodiment unequal length, height and width as shown in Figure 5. The length is greater than the width, in turn greater than the height. The pieces thus have end faces 90, top and bottom faces 92 and side faces 94. In the specific embodiment, the cuboids have a length of 1.95cm, a width of 1.05cm and a thickness of 0.8cm. The skilled person will readily realise that the apparatus is not limited to this exact size and shape of product piece, but that alternative sizes and shapes of product pieces may also usefully be fed by the apparatus described.

The apparatus is divided into a first feed section 2 for feeding randomly oriented product pieces 1 onto a number of tracks, and a second placement section 4 for accurately delivering product pieces into mould cavities.

The first feed section 2 includes a storage hopper 3 for accepting product pieces. The storage hopper 3 is mounted on vibrating panel 6 for shaking product pieces out through outlet 8 of the storage hopper onto a plurality of carrier tracks arranged in parallel sloping downwards from an inlet end 12 adjacent to the hopper to an outlet end 14. The carrier tracks 10 have a v-shaped cross section as shown.

The carrier tracks 10 are arranged over laterally extending conveyors 16, 18. The first conveyor 16 is a recycle conveyor for accepting any excess product taken out of the storage hopper that does not fall onto the carrier track 10. Finger 78 is provided to remove misoriented product pieces from the first tracks 10, and tip them onto recycle conveyor 16. A waste conveyor 18 is arranged under a slot 20 in the carrier tracks. Powder and waste product can fall through slot 20 onto the waste conveyor 18.

Each carrier track 10 can be vibrated by individual vibration unit 22. Each of the plurality of carrier tracks 10 is separately vibratable, under the control of control unit 24 which may be, for example a general purpose computer.

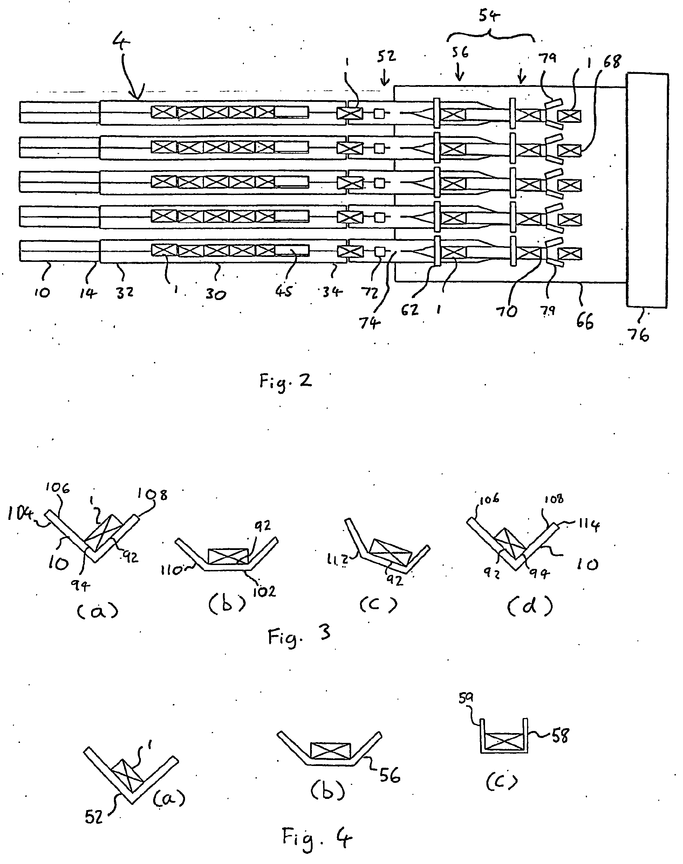

Figure 3 illustrates the cross-section of the carrier tracks 10, which are contoured to uniquely orient product pieces as shown in Figure 3. The cross section changes along the length of the track. An orientation section 110, 112 is arranged longitudinally between v-shaped sections 104,114. Product pieces are fed from first v-shaped section 104 in one of two orientations, with the side 94 of the product piece against either of the legs 106,108 of the v-shaped section. The product pieces are fed to the first part 110 of the orientation section 110 which is shaped with a flat bottom 102 to lie the product pieces 1 flat, so that cuboidal product pieces lie with the top or bottom face 92 flat against the bottom of the guide 102 (Fig. 3b). The contour of the guide then evolves in a forward direction to a v-shape 114 smoothly through the second section 112 of the orientation section 110 (Fig. 3c) to orient the product pieces consistently with a side face 94 against a first leg 106 of the v-shape 104 and a top or bottom face against the second leg 108 (Fig. 3d).

The second placement section 4 shown in Figures 1 and 2 of the placement apparatus is the section that is capable of accurately placing the product pieces into the mould tray cavities at high speed. A plurality of accumulation tracks 30 are angled downwards from an input end 32 adjacent to the first feed section 2 to an output end 34. The input ends 32 of the accumulation tracks are arranged in alignment with the output ends 14 of the respective carrier tracks 10. A photocell 36 is provided to detect when the amount of product pieces 1 held on the accumulation track 30 is insufficient and requires refilling from the respective carrier track 10.

A delivery unit 38 is provided at the output end 34 of the accumulation track 30. The delivery unit includes a gate 40 moveable from a first position (shown in solid lines) in which it prevents product pieces moving onwards from the output end 34 of the accumulation track, to an open position (shown dotted) in which product pieces can move onwards. The gate 40 is connected to servo 42 to drive the gate rapidly. An air jet unit 44 is provided having a nozzle 45 arranged in alignment above each accumulation track 30 at about 30° to the accumulation track and facing forward for delivering an air jet shown schematically 48 driving product pieces 1 rapidly forwards. A controllable valve 46 controls the air jet. A separate valve 46 is provided for each air jet on each accumulation track to improve the actuation speed compared to the use of a single valve for a large number of air jets. The valve 46 and servo 42 are both connected to control unit 24.

The cross-section of the feed guides 50 is illustrated in Figure 4 at three positions along the length of the guides 52. The feed guides have a first v-shaped section 52 (Figure 4a) and a second alignment section 54 (Figure 4b, Figure 4c) which is shaped to orient and position the pieces. In the illustrated embodiment, the alignment section has a first part 56 (Figure 4b) having a flat-bottomed cross section to allow the product pieces to lie flat and a second section 58 (Figure 4c) having, in addition to a flat bottom, constraining side walls 59 to align and orient the product pieces precisely, by constraining lateral movement.

A product conveyor 60 having a plurality of flights 62 is arranged to drive product pieces 1 forward within the feed guides 50. The product conveyor is driven by servo 61. The product conveyor extends the whole length of the second section 54.

A mould conveyor 64 drives a series of mould trays 66 having a plurality of mould tray cavities 68 past the output end 70 of the feed guides. In the embodiment shown the pitch of the flights is constant and final positioning of the product relative to the varying pitch of the mould cavities is achieved by advancing and retarding the synchronisation of the servo drive driving the flights. In a further possible development the pitch of the flights can be made to coincide with the pitch of the mould cavities so that motion can be more uniform.

Detent 72 and slot 74 are provided in the first section 52 of the feed guide 50. The detent 72 prevents rearward motion of product pieces 1, and the slot 74 provides a route for the dissipation of the air jet 48 output by air nozzle 45.

Rearwards facing air nozzles 79 are provided at the output ends 70 of the feed guides. Air is provided from the nozzles 79 to hold the product pieces 1 against the flights 62 to maintain the product pieces 1 in alignment against the flights 62 during placement of product pieces 1 into the mould trays. This provides a noticeable improvement in placement accuracy.

Reciprocating roller 76 is provided on the path of the mould trays 66 after the output end 70 of the feed guides 50. The roller is arranged for forwards-backwards reciprocation over the moulds 66.

The mould cavities are arranged in a two dimensional array on a mould (Figure 7). They may be arranged singly, or in groups to produce larger blocks 96 which can be adjusted to market requirements.

The apparatus can cope with any mould design - lanes can be switched off to allow for gaps 98 between blocks 96.

The flexibility afforded by apparatus according to the invention means that an additional unit may be placed on a line to fill any unfilled cavities. An imaging system may be used to detect unfilled cavities.

In the embodiment the mould trays 66 for use in the apparatus described contain 52 lanes of cavities 68 close together. The compact design of the apparatus enables each lane to be filled by an individual feed guide 50; with the 52 lanes filled from 52 feed guides in parallel. Figure 2 shows a simplified drawing of the feed guides in parallel feeding the trays 68 of mould tray 66. Note that for simplicity Figures 2 and 7 show fewer than 52 lanes. Of course, the skilled person will appreciate that the invention can be arranged to deliver any number of feed guides in parallel.

Respective carrier tracks 10, accumulation tracks 30 and feed guides 50 are arranged in longitudinal alignment, parallel to other carrier tracks 10, accumulation tracks 30 and feed guides 50.

In use, product pieces 1 are shaken out of the storage hopper 3 by the action of vibrating panels 6 through outlet 8 and onto the input end 12 of carrier tracks 10. Excess product pieces shaken out of the hopper fall onto the recycle conveyor 16 from where they are recycled back into the hopper 3.

The photocell 36 determines which accumulation tracks 30 require additional product pieces, and this information is relayed through control unit 24 to cause the corresponding carrier tracks 10 to be vibrated by corresponding vibration units 22. This causes the necessary tracks 10 to be vibrated and for product to be shaken along the selected track or tracks by the vibration. The vibration is in the direction shown by the arrow and that this is provided by a cam and sprocket arrangement. Product pieces 1 are thus fed into the respective accumulation track 30 until the desired number of pieces 1 on that track 30 is reached. The photocell 36 then determines that the accumulation track 30 has sufficient pieces and relays the information through control unit 24 to cease the vibration of the track.

The first section 2 of the apparatus thus takes the product pieces and applies the product pieces in sufficient numbers to accumulation tracks 30 to keep each of the accumulation tracks 30 supplied with product. It will be appreciated that for some mould designs some feed guides 50 and accordingly accumulation tracks 30 are not used. The control unit can arrange not to fill the corresponding accumulation tracks 30 at all simply by not causing the respective carrier tracks 10 to be vibrated.

A series of mould trays 66 with cavities 68 are driven by conveyor 64 past the ends 70 of the feed guides 50 synchronously with the motion of product conveyor 60. The speed and relative position of the product conveyor 60 and mould conveyor 64 can be fine tuned to align the product pieces 1 with the cavities 68 in the mould trays. Product pieces 1 ejected by delivery mechanism 38 into feed guide 50 pass through the first section 52 to the second section 54 where they are propelled along by the flights 62 of the conveyor. The product pieces are pushed by the flights 62 through the second section 54 of the feed guide 50 which orients products in first part 56 and then aligns the product in the second part 58 with the mould cavities 68.

Note that is not necessary for the speed of the mould trays 66 to be identical with the speed of the flights 62 of conveyor 60, only that the timing is such that the product pieces are ejected from the ends 70 of the feed guides when a tray 68 is correctly positioned to receive the product piece.

The product pieces may be ejected as required, to match mould tray requirements. Often, the rate of ejection required is not exactly uniform to cope, for example, with gaps 98 between blocks 96 of cavities 68.

The motion profile of the conveyor 60 and attached flights 62 may be adjusted as required. In particular, the motion of the flights 62 may be speeded up as the product piece passes the end 70 of the feed guide 50 to help avoid the product piece 1 tipping over into the mould cavity, and then slowed down to release the product piece 1 from the flight 62.

In use, the mould cavities already contain some chocolate at this stage and so product is simply propelled out of the end 70 of feed guides 50 to drop a short distance into the chocolate in the underlying mould cavities 68. The reciprocating roller 76 pushes the pieces into the chocolate as they will not sink into it under gravity alone. It further pushes back into place any product pieces that may have been slightly disoriented within the cavities 68.

In this way, a large number of product pieces can be accurately aligned and delivered into mould cavities 68 at high speeds, for example 120 or 150 pieces per minute.

Accurate alignment can be very important. If product pieces are not placed squarely and centrally into the mould cavity then they may catch the edge of the mould. This may result in the product pieces 1 being crushed by pressing roller 76 or protruding from the finished product. Protrusion could cause jamming in the wrapping machine and also create bridges or holes through the chocolate through which moisture could migrate to soften the product and shorten shelf life.

The inventive apparatus and method is able to reduce misalignment and jamming and still operate at high speed for industrial scale manufacturing.

It is believed by the inventors that an important consideration behind the present invention is the realisation by the inventors that it is necessary to avoid constraining the position of product pieces other than in an open v-guide till they are positively driven and physically pushed along in order to reduce the risk of blockages. The open v-guides are resistant to blockage, since misoriented or incorrectly aligned pieces cannot engage two opposed sidewalls to block the guide. The flights 62 of the product conveyor 60 are capable of pushing a product piece 1 forward through feed guide even if slightly disoriented. Alternative approaches, for example methods including belt conveyors are easily blocked if a product piece is slightly disoriented in a guide.

Accordingly, the present invention is much more reliable than prior methods of delivering products at high speed into moulds.

The invention is of particular value in the delivery of small friable product pieces, made for example of biscuit, wafer, laminated wafer, cinder toffee, sugar honeycomb, nougatine, cracknel or other friable pieces of product. The application is particularly useful for making small, bite-sized products.

It is not necessary for the product pieces to have the precise dimensions disclosed. In particular, the product pieces may be approximately 1 to 5cm long, preferably 1 to 3cm long, and have a width and height of between 0.5 and 2cm, preferably between 0.7 and 1.5cm.

The apparatus has particular utility in delivering product pieces accurately into mould trays only slightly larger than the product pieces.

The apparatus and method is able to reduce misalignment and still operate at high speed for economically viable industrial scale manufacturing without jamming.

In a modification of the invention shown in Figure 6 a vacuum roller 80 having a plurality of cavities 82 around the outer circumference and a vacuum path 84 to each cavity 82 is provided. Product pieces are taken by the roller 80 from the ends 70 of the feed guides and delivered into the cavities 68 of mould trays driven by the mould conveyor 64. The point of this is that the cavities 82 of the roller 80 may be shaped to optimise the delivery of product into the cavity, rather than being shaped as required in the final product. Product pieces can then be dropped into the cavity 68 by simply releasing the vacuum at a predetermined position of the roller.

From reading the present disclosure, other variations and modifications will be apparent to persons skilled in the art.

In particular, the skilled person will be aware of a number of suitable feed systems for carrying out the task of the first section 2 of the feed apparatus, and any suitable system may be used.

## Claims

1. A placement apparatus for feeding friable product pieces (1) in parallel into a series of cavities (68) in trays (66), the placement apparatus comprising:
a plurality of accumulation tracks (30) for accepting and holding individual product pieces (1) and delivering product pieces from their output ends (34);
delivery means (38) at the output ends of the accumulation tracks (30) for controllably ejecting individual product pieces from the accumulation tracks;
a plurality of feed guides (50) having input ends (52) and output ends (70), the input ends (52) being aligned with the output ends (34) of the accumulation tracks (30) for accepting individual product pieces (1) ejected from the accumulation tracks, **characterized in that** the feed guides have an alignment section (54) shaped to orient and align the product pieces and deliver the product pieces to the cavities (68) in the trays (66);
further comprises tray conveying means (64) for moving trays (66) past the output ends of the feed guides; and
conveying means (60) for pushing product pieces forwards along at least the whole of the alignment section (54) of the feed guides (50) and out of the output ends of the feed guides synchronously with the motion of the trays (66) to deliver product pieces into the cavities in the trays.

2. A placement apparatus according to claim 1 wherein the delivery means (38) for each track includes:
a forwards facing air nozzle (45) for delivering an air jet to accelerate individual product pieces (1) onto the feed guide (50).

3. A placement apparatus according to claim 2 wherein the air nozzle (45) is aligned above the output end (34) of the accumulation track (30) at an angle of 15° to 45° to the accumulation track.

4. A placement apparatus according to claim 2 or 3 wherein the feed guides (50) define a slot in (74) a v-shaped section of the feed guides arranged at the input end (52) of the feed guides.

5. A placement apparatus according to any preceding claim further comprising a detent (72) at the input ends (52) of the feed guides (50) for preventing rearwards motion of product pieces (1) ejected into the feed guides.

6. A placement apparatus according to any preceding claim wherein the conveying means (60) includes a plurality of flights (62) for pushing product pieces along the feed guides (50).

7. A placement apparatus according to any preceding claim wherein the delivery means (38) further comprises a moveable gate (40) moveable between a closed position in which the gate prevents product pieces (1) travelling onwards to the second feed guide and an open position releasing product pieces.

8. A placement apparatus according to any preceding claim further comprising a roller (76) arranged in the path of the trays (66) after the second ends of the feed guides to roll across the tray cavities after product pieces (1) have been fed into the trays.

9. A placement apparatus according to claim 8 wherein the roller (76) is arranged for reciprocating forwards and backwards motion at a speed higher than the speed of the trays.

10. A placement apparatus according to any preceding claim wherein the placement apparatus is capable of delivering at least 100 pieces (1) per minute per feed guide into the tray cavities.

11. A placement apparatus according to any preceding claim wherein each accumulation track (30) is aligned longitudinally with its respective feed guide (50), the feed guides and accumulation tracks being arranged in parallel.

12. A placement apparatus according to any preceding claim wherein the accumulation tracks (30) are angled downwards towards the output ends (34) at an angle insufficient to cause the product pieces to slide down the accumulation tracks (30) under their own weight and further including vibration means (22) to vibrate the accumulation tracks to cause product pieces to move downwards along the tracks.

13. A placement apparatus according to any preceding claim wherein the accumulation tracks (30) are v-shaped.

14. A placement apparatus according to any preceding claim including a further feed apparatus having a hopper (3) for feeding product pieces (1) into the individual accumulation tracks (30).

15. A placement apparatus according to claim 14 wherein the further feed apparatus includes a plurality of further tracks (10) sloping downhill feeding product pieces (1) into the accumulation tracks (30) and a reciprocating drive for selectably vibrating the further tracks (10) to cause product to be transported along the further tracks, further comprising control means (24) for causing vibration of respective further tracks when the number of product pieces (1) on the corresponding accumulation track falls below a predetermined value.

16. A placement apparatus according to claim 14 or 15 wherein the further feed apparatus is capable of feeding product pieces (1) to the accumulation tracks (30) at a rate of at least 10% higher than the rate of delivery of product to the tray cavities.

17. A method of feeding friable product pieces (1) into a series of cavities (68) in trays (66), **characterized by**:
ejecting individual product pieces (1) into feed guides (30) past a first feed guide section (52) into a second feed guide section (54);
aligning the product pieces in the second feed guide section (54);
conveying trays (66) with cavities (68) past the end of the second feed guide section (54); and
pushing the product pieces (1) positively through the whole length of the second feed guide section (54) and out of the ends (70) into the cavity trays (66).

18. A method according to claim 17 wherein the step of ejecting individual product pieces (1) is carried out with an air jet.

19. A method according to claim 17 or 18 including accumulating product pieces (1) on a plurality of accumulation tracks (30) and ejecting the product pieces from the accumulation tracks (30) into corresponding feed guides (50).

20. A method according to claim 17, 18 or 19 including pushing the product pieces (1) out of the ends (70) of the feed guides (50) at an initially higher speed followed by a lower speed.

## Patentansprüche

1. Anordnungsvorrichtung zum parallelen Zuführen bröckeliger Produktstücke (1) in eine Reihe von Vertiefungen (68) in Tabletts (66), wobei die Anordnungsvorrichtung umfasst:
eine Vielzahl von Ansammelspuren (30), um einzelne Produktstücke (1) aufzunehmen und zu halten, und um Produktstücke aus ihren Ausgangsenden (34) zu liefern;
Liefermittel (38) an den Ausgangsenden der Ansammelspuren (30), um einzelne Produktstücke aus den Ansammelspuren kontrolliert auszustoßen,
eine Vielzahl von Zufuhrführungen (50) mit Eingangsenden (52) und Ausgangsenden (70), wobei die Eingangsenden (52) mit den Ausgangsenden (34) der Ansammelspuren (30) ausgerichtet sind, um einzelne Produktstücke (1) aufzunehmen, die aus den Ansammelspuren ausgestoßen werden, **dadurch gekennzeichnet, dass** die Zufuhrführungen einen Ausrichtungsabschnitt (54) aufweisen, der geformt ist, um die Produktstücke zu orientieren und auszurichten, und um die Produktstücke zu den Vertiefungen (68) in den Tabletts (66) zu liefern;
des Weiteren umfassend Tablettfördermittel (64), um Tabletts (66) an den Ausgangsenden der Zufuhrführungen vorbei zu bewegen; und
Fördermittel (60), um Produktstücke entlang zumindest des gesamten Ausrichtungabschnittes (54) der Zufuhrführungen (50) vorwärts zu schieben, und aus den Ausgangsenden der Zufuhrführungen synchron mit der Bewegung der Tabletts (66), um Produktstücke in die Vertiefungen in den Tabletts zu liefern.

2. Anordnungsvorrichtung nach Anspruch 1, bei der die Liefermittel (38) für jede Spur umfassen:
eine vorwärts gerichtete Luftdüse (45) zum Liefern eines Luftstrahls, um einzelne Produktstücke (1) auf die Zufuhrführung zu beschleunigen:

3. Anordnungsvorrichtung nach Anspruch 2, bei der die Luftdüse (45) oberhalb des Ausgangsendes (34) der Ansammelspur (30) in einem Winkel von 15° bis 45° zu der Ansammelspur ausgerichtet ist.

4. Anordnungsvorrichtung nach Anspruch 2 oder 3, bei der die Zufuhrführungen (50) einen Schlitz (74) in einem V-förmigen Abschnitt der Zufuhrführungen definieren, der an dem Eingangsende (52) der Zufuhrführungen angeordnet ist.

5. Anordnungsvorrichtung nach einem vorhergehenden Anspruch, des Weiteren mit einer Arretierung (72) an den Eingangsenden (52) der Zufuhrführungen (50), um eine Rückwärtsbewegung der Produktstücke (1) zu verhindern, die in die Zufuhrführungen ausgestoßen wurden.

6. Anordnungsvorrichtung nach einem vorhergehenden Anspruch, bei der die Fördermittel (60) eine Vielzahl Mitnehmer (62) umfassen, um Produktstücke entlang der Zuführungen (50) zu schieben.

7. Anordnungsvorrichtung nach einem vorhergehenden Anspruch, bei der die Liefermittel (38) des Weiteren eine bewegbare Schranke (40) umfassen, die zwischen einer geschlossenen Stellung, in der die Schranke Produktstücke (1) daran hindert, nach vorne zu der zweiten Zufuhrführung zu wandern, und einer offenen Stellung bewegbar ist, in der sie die Produktstücke freigibt.

8. Anordnungsvorrichtung nach einem vorherigen Anspruch, des Weiteren mit einer Walze (76), die in dem Weg der Tabletts (66) nach den zweiten Enden der Zufuhrführungen angeordnet ist, um über die Tablettvertiefungen zu rollen, nachdem Produktstücke (1) in die Tabletts zugeführt wurden.

9. Anordnungsvorrichtung nach Anspruch 8, bei der die Walze (76) für eine hin- und hergehende Vorwärts- und Rückwärtsbewegung mit einer höheren Geschwindigkeit als die Geschwindigkeit der Tabletts eingerichtet ist.

10. Anordnungsvorrichtung nach einem vorhergehenden Anspruch, bei der die Anordnungsvorrichtung fähig ist, zumindest 100 Stücke (1) pro Minute pro Zufuhrführung in die Tablettvertiefungen zu liefern.

11. Anordnungsvorrichtung nach einem vorhergehenden Anspruch, bei der jede Ansammelspur (30) in Längsrichtung mit ihrer jeweiligen Zufuhrführung (50) ausgerichtet ist, wobei die Zufuhrführungen und die Ansammelspuren parallel zueinander angeordnet sind.

12. Anordnungsvorrichtung nach einem vorhergehenden Anspruch, bei der die Ansammelspuren (30) nach unten in Richtung der Ausgangsenden (34) in einem Winkel abgewinkelt sind, der unzureichend ist, um die Produktstücke nach unten in die Ansammelspuren (30) unter ihrem eigenen Gewicht gleiten zu lassen, und des Weiteren Vibrationsmittel (22) umfassen, um die Ansammelspuren zu vibrieren, um Produktstücke sich nach unten entlang der Spuren bewegen zu lassen.

13. Anordnungsvorrichtung nach einem der vorhergehenden Ansprüche, bei der die Ansammelspuren (30) V-förmig sind.

14. Anordnungsvorrichtung nach einem der vorherigen Ansprüche mit einer weiteren Zuführvorrichtung, die einen Einfülltrichter (3) zum Zuführen von Produktstücken (1) in die einzelnen Ansammelspuren (30) aufweist.

15. Anordnungsvorrichtung nach Anspruch 14, bei der die weitere Zuführvorrichtung eine Vielzahl von weiteren Spuren (40) umfasst, die abfallen und Produktstücke (1) in die Ansammelspuren (30) zuführen, und einen hin- und hergehenden Antrieb zum selektierbaren Vibrieren der weiteren Spuren (10) umfasst, um zu bewirken, dass das Produkt entlang der weiteren Spuren transportiert wird, des Weiteren umfassend Regelmittel (24) zum Bewirken einer Vibration einzelner weiterer Spuren, wenn die Anzahl von Produktstücken (1) auf den entsprechenden Ansammelspuren unter einen vorbestimmten Wert fällt.

16. Anordnungsvorrichtung nach Anspruch 14 oder 15, bei der die weitere Zuführvorrichtung fähig ist, Produktstücke (1) zu den Ansammelspuren (30) mit einer Rate zuzuführen, die zumindest 10 % höher als die Lieferrate von Produkten zu den Tablettvertiefungen ist.

17. Verfahren zum Zuführen bröckeliger Produktstücke (1) in eine Reihe von Vertiefungen (68) in Tabletts (66), **gekennzeichnet durch**:
Ausstoßen von einzelnen Produktstücken (1) in Zufuhrführungen (30) vorbei an einem ersten Zufuhrführungsabschnitt (52) in einen zweiten Zufuhrführungsabschnitt (54);
Ausrichten der Produktstücke in dem zweiten Zufuhrführungsabschnitt (54);
Fördern von Tabletts (66) mit Vertiefungen (68) an dem Ende des zweiten Zufuhrführungsabschnitts (54) vorbei; und zwangsweises Schieben der Produktstücke (1) über die gesamte Länge des zweiten Zufuhrführungsabschnitts (54) und aus den Enden (70) in die Vertiefungstabletts (66).

18. Verfahren nach Anspruch 17, bei dem der Schritt des Ausstoßens einzelner Produktstücke (1) mit einem Luftstrahl ausgeführt wird.

19. Verfahren nach Anspruch 17 oder 18, umfassend das Ansammeln von Produktstücken (1) auf einer Vielzahl von Ansammelspuren (30) und Ausstoßen der Produktstücke aus den Ansammelspuren (30) in entsprechende Zufuhrführungen (50).

20. Verfahren nach Anspruch 17, 18 oder 19, umfassen das Schieben der Produktstücke (1) aus den Enden (70) der Zufuhrführungen (50) mit einer anfänglich höheren Geschwindigkeit, gefolgt von einer niedrigen Geschwindigkeit.

## Revendications

1. Appareil de placement pour distribuer des pièces de produits friables (1) en parallèle dans une série de cavités (68) dans des plateaux (66), l'appareil de placement comprenant :
une pluralité de voies d'accumulation (30) pour accepter et retenir des pièces de produits (1) individuelles et décharger les pièces de produits depuis leurs extrémités de sortie (34) ;
un moyen de décharge (38) aux extrémités de sortie des voies d'accumulation (30) pour éjecter de façon contrôlée les pièces de produits individuelles des voies d'accumulation ;
une pluralité de guides de distribution (50) comportant des extrémités d'entrée (52) et des extrémités de sortie (70), les extrémités d'entrée (52) étant alignées avec les extrémités de sortie (34) des voies d'accumulation (30) pour accepter les pièces de produits (1) individuelles éjectées des voies d'accumulation, **caractérisé en ce que** les guides de distribution comportent une section d'alignement (54) conformée pour orienter et positionner les pièces de produits et décharger les pièces de produits dans les cavités (68) dans les plateaux (66) ;
comprenant en outre un moyen formant convoyeur de plateaux (64) pour déplacer les plateaux (66) au-delà des extrémités de sortie des guides de distribution ; et
un moyen formant convoyeur (60) pour pousser les pièces de produits vers l'avant le long d'au moins la totalité de la section d'alignement (54) des guides de distribution (50) et hors des extrémités de sortie des guides de distribution en synchronisation avec le mouvement des plateaux (66) pour décharger les pièces de produits dans les cavités dans les plateaux.

2. Appareil de placement selon la revendication 1, dans lequel le moyen de décharge (38) pour chaque voie comprend :
une buse à air (45) tournée vers l'avant pour décharger un jet d'air afin d'accélérer les pièces de produits (1) individuelles sur le guide de distribution (50).

3. Appareil de placement selon la revendication 2, dans lequel la buse à air (45) est alignée au-dessus de l'extrémité de sortie (34) de la voie d'accumulation (30) à un angle de 15° à 45° par rapport à la voie d'accumulation.

4. Appareil de placement selon la revendication 2 ou 3, dans lequel les guides de distribution (50) définissent une fente (74) dans une section en forme de V des guides de distribution agencée à l'extrémité d'entrée (52) des guides de distribution.

5. Appareil de placement selon l'une quelconque des revendications précédentes, comprenant en outre un cliquet (72) aux extrémités d'entrée (52) des guides de distribution (50) pour empêcher un mouvement vers l'arrière des pièces de produits (1) éjectées dans les guides de distribution.

6. Appareil de placement selon l'une quelconque des revendications précédentes, dans lequel le moyen formant convoyeur (60) comprend une pluralité de cales (62) pour pousser les pièces de produits le long des guides de distribution (50).

7. Appareil de placement selon l'une quelconque des revendications précédentes, dans lequel le moyen de décharge (38) comprend en outre une porte mobile (40) entre une position fermée dans laquelle la porte empêche que les pièces de produits (1) se déplacent vers l'avant jusqu'au deuxième guide de distribution et une position ouverte de libération des pièces de produits.

8. Appareil de placement selon l'une quelconque des revendications précédentes comprenant en outre un rouleau (76) situé sur le trajet des plateaux (66) après les deuxièmes extrémités des guides de distribution pour rouler d'un bout à l'autre des cavités de plateaux une fois que les pièces de produits (1) ont été distribuées dans les plateaux.

9. Appareil de placement selon la revendication 8, dans lequel le rouleau (76) est agencé pour avoir un mouvement de va-et-vient en avant et en arrière à une vitesse supérieure à la vitesse des plateaux.

10. Appareil de placement selon l'une quelconque des revendications précédentes, dans lequel l'appareil de placement est apte à décharger au moins 100 pièces de produits (1) à la minute par guide de distribution dans les cavités de plateaux.

11. Appareil de placement selon l'une quelconque des revendications précédentes, dans lequel chaque voie d'accumulation (30) est alignée longitudinalement avec son guide de distribution (50) respectif, les guides de distribution et les voies d'accumulation étant agencés en parallèle.

12. Appareil de placement selon l'une quelconque des revendications précédentes, dans lequel les voies d'accumulation (30) sont inclinées vers le bas vers les extrémités de sortie (34) à un angle insuffisant pour amener les pièces de produits à glisser sur les voies d'accumulation (30) sous l'effet de leur propre poids et comprenant en outre un moyen de vibration (22) pour faire vibrer les voies d'accumulation afin d'amener les pièces de produits à se déplacer vers le bas le long des voies.

13. Appareil de placement selon l'une quelconque des revendications précédentes, dans lequel les voies d'accumulation (30) sont en forme de V.

14. Appareil de placement selon l'une quelconque des revendications précédentes, comprenant un appareil de distribution supplémentaire comportant une trémie (3) pour distribuer les pièces de produits (1) dans les voies d'accumulation (30) individuelles.

15. Appareil de placement selon la revendication 14, dans lequel l'appareil de distribution supplémentaire comprend une pluralité de voies supplémentaires (10) inclinées vers le bas distribuant les pièces de produits (1) dans les voies d'accumulation (30) et un mécanisme d'entraînement à va-et-vient pour faire vibrer sélectivement les voies supplémentaires (10) afin d'amener le produit à être transporté le long des voies supplémentaires, comprenant en outre un moyen de commande (24) pour provoquer la vibration des voies supplémentaires respectives lorsque le nombre de pièces de produits (1) sur la voie d'accumulation correspondante chute en dessous d'une valeur prédéterminée.

16. Appareil de placement selon la revendication 14 ou 15, dans lequel l'appareil de distribution supplémentaire est apte à distribuer les pièces de produits (1) jusqu'aux voies d'accumulation (30) à un débit supérieur d'au moins 10 % au taux de décharge du produit dans les cavités de plateaux.

17. Procédé de distribution de pièces de produits (1) friables dans une série de cavités (68) dans des plateaux (66), **caractérisé par** :
l'éjection des pièces de produits (1) individuelles dans des guides de distribution (30) au-delà d'une première section de guide de distribution (52) dans une deuxième section de guide de distribution (54) ;
l'alignement des pièces de produits dans la deuxième section de guide de distribution (54) ;
le transport de plateaux (66) comportant des cavités (68) au-delà de l'extrémité de la deuxième section de guide de distribution (54) ; et
la poussée des pièces de produits (1) positivement sur la totalité de la longueur de la deuxième section de guide de distribution (54) et hors des extrémités (70) dans les plateaux à cavités (66).

18. Procédé selon la revendication 17, dans lequel l'étape d'éjection des pièces de produits (1) individuelles est réalisée au moyen d'un jet d'air.

19. Procédé selon la revendication 17 ou 18, comprenant l'accumulation de pièces de produits (1) sur une pluralité de voies d'accumulation (30) et l'éjection des pièces de produits des voies d'accumulation (30) dans des guides de distribution (50) correspondants.

20. Procédé selon la revendication 17, 18 ou 19 comprenant la poussée des pièces de produits (1) hors des extrémités (70) des guides de distribution (50) à une vitesse initialement plus élevée suivie d'une vitesse moins élevée.
